# EUROPÄISCHE PATENTSCHRIFT

(11) **EP 1 210 233 B1**
(45) Veröffentlichungstag und Bekanntmachung des Hinweises auf die Patenterteilung: **05.03.2003**
(21) Anmeldenummer: 00964096.2
(22) Anmeldetag: 02.09.2000
(51) Int. Cl.: B60B 3/10, B60B 3/06

(54) **LEICHTMETALLRAD**
LIGHT METAL WHEEL
ROUE EN METAL LEGER

(30) Priorität: 08.09.1999 JP 25408199; 27.11.1999 DE 19957255
(43) Veröffentlichungstag der Anmeldung: 05.06.2002
(73) Patentinhaber: BBS Motorsport & Engineering GmbH, 77761 Schiltach (DE)
(72) Erfinder: BAUMGARTNER, Heinrich, 77761 Schiltach (DE)
(74) Vertreter: Patentanwälte Westphal, Mussgnug & Partner
(86) Internationale Anmeldenummer: EP0008586
(87) Internationale Veröffentlichungsnummer: WO01017799

(56) Entgegenhaltungen:
- EP-A- 0 547 313
- EP-A- 0 768 191
- EP-A- 0 922 591
- US-A- 5 718 485

## Beschreibung

Die Erfindung betrifft ein Rad, insbesondere ein Leichtmetallrad für Kraftfahrzeuge gemäß Oberbegriff des Anspruchs 1.

Derartige Räder erfreuen sich speziell in der Ausführung als Leichtmetallräder sehr großer Beliebtheit, da sich neben einem gesteigerten ästhetischen Gesamterscheinungsbild des Kraftfahrzeugs weitere technische Vorteile erzielen lassen.

Eine Einrichtung nach dem Oberbegriff des Anspruchs 1 ist aus der EP 0 547 313 A bekannt.

Ganz allgemein geht die Tendenz dahin, das Gewicht des Rades soweit wie möglich zu reduzieren. Dies ist ein weiterer Grund für die zunehmende Verbreitung der Leichtmetallräder. Die Gewichtsersparnis gegenüber herkömmlichen Stahlrädern fällt jedoch häufig nicht sehr hoch aus, da die verwendeten Leichtmetalllegierungen meist nicht die Festigkeit von Stahl aufweisen. Solche Räder müssen deshalb mit größeren Wanddicken ausgeführt werden, wodurch der Gewichtsvorteil zum Teil wieder verloren geht.

Der vorliegenden Erfindung liegt deshalb das Problem zugrunde, ein Rad, insbesondere ein Leichtmetallrad für Kraftfahrzeuge, derart weiterzuentwickeln, dass es die geschilderten Nachteile nicht mehr aufweist. Insbesondere sollte ein Rad geschaffen werden, das gegenüber herkömmlichen Rädern eine weitere Gewichtsreduzierung oder eine Verbesserung der mechanischen Eigenschaften zuläßt.

Gelöst wird dieses Problem durch ein Rad mit den Merkmalen des Anspruchs 1.

Vorteilhafte Ausführungsformen der Erfindung sind durch die Merkmale der Unteransprüche angegeben.

Die Erfindung basiert auf der Idee, in mechanisch besonders stark beanspruchten Bereichen des Rads, also im Bereich des Felgeninnen- und des Felgenaußenhorns Hohlkammern zu bilden.

Diese Hohlkammern sind vergleichbar mit ganz allgemein aus dem Leichtbau bekannten geschlossenen Hohlkammer-Profilabschnitten, die eine erhebliche Steigerung der Festigkeit erlauben. Konkret ist vorgesehen, im Bereich des Felgeninnenbetts und/oder des Felgenaußenbetts Profilsegmente einzusetzen, die jeweils in Umfangrichtung Hohlkammern bilden. In der Regel ist die Hohlkammer in Umfangsrichtung durchgehend ausgebildet, so dass sich eine optimal über den Umfang gleichmäßig verteilte Steifigkeitserhöhung einstellt. Im Bereich des Felgeninnenhorns wird die Erhöhung der Biegesteifigkeit dazu ausgenutzt, das sogenannte Impactverhalten zu verbessern. Im Bereich des Felgenaußenhorns steht der Aspekt der Gewichtsreduzierung im Vordergrund.

Ein besonders gewichtssparender Aufbau ergibt sich dann, wenn die dem Felgenaußenbett zugeordnete Hohlkammer mit Hohlkammerspeichen kombiniert wird. Auf diese Weise läßt sich eine Hohlkammerstruktur realisieren, die ausgezeichnete Steifigkeitswerte bei gleichzeitig minimalem Gewicht ermöglicht.

Der Aufbau der Hohlkammern erfolgt durch Profilsegmente, die mit der Radfelge im Bereich des Felgeninnenbetts bzw. des Felgenaußenbetts angebracht und zu einem geschlossenen Hohlprofil verbunden sind.

Ein besonders einfacher Aufbau ergibt sich dann, wenn die Profilsegmente als Schalen, insbesondere als Halbschalen, ausgebildet sind. Diese lassen sich auf einfache Art und Weise vorfertigen und in der Regel am Außenumfang der Radfelge aufsetzen. Die einzelnen Segmente können durch an sich bekannte und bewährte Verbindungstechniken, wie beispielsweise Schweißen, Kleben oder Bördeln miteinander verbunden werden. Ebenso erfolgt die Verbindung zur Radfelge hin, so dass sich ein geschlossenes Hohlkammerprofil erstellen läßt.

Die geometrische Gestaltung der Profilsegmente kann an sich so gewählt werden, dass im Hinblick auf die angestrebte Biegesteifigkeit optimale Ergebnisse erzielen lassen. In der Regel stellt jedoch zumindest ein Abschnitt der jeweiligen Profilsegmente das Felgenbett, also das Felgeninnenbett oder das Felgenaußenbett, dar, so dass insoweit in jenen Bereichen die Geometrie als Sitz oder Auflagefläche für den Reifen vorgegeben ist.

Gemäß einer bevorzugten Variante sind die Profilsegmente im Bereich des Felgeninnenbetts und die Profilsegmente im Bereich des Felgenaußenbetts deckungsgleich ausgebildet. Sie können somit als sogenannte Gleichteile bevorratet werden und erlauben den wahlweisen Einsatz im Innen- wie im Außenbereich.

Schließlich ist es auch möglich, die Profilsegmente durch einen spanlosen Verformungsvorgang aus einem an der Radfelge angeformten, insbesondere integral angegossenen Ringsteg zu bilden. Hierfür eignen sich sogenannte Knetwerkstoffe, die kalt umformbar sind, oder Gusslegierungen, die warm umgeformt werden können.

Die Erfindung wird näher anhand der in den Figuren dargestellten Ausführungsbeispiele erläutert. Es zeigen:
- Fig. 1: Rad im Halbschnitt, erste Variante;
- Fig. 2: Rad im Halbschnitt, zweite Variante;
- Fig. 3: Rad im Halbschnitt, dritte Variante;
- Fig. 4: Rad im Halbschnitt, vierte Variante;
- Fig. 5: Rad im Halbschnitt, fünfte Variante;
- Fig. 6: Rad im Halbschnitt, sechste Variante;
- Fig. 7: Rad im Halbschnitt, siebente Variante;

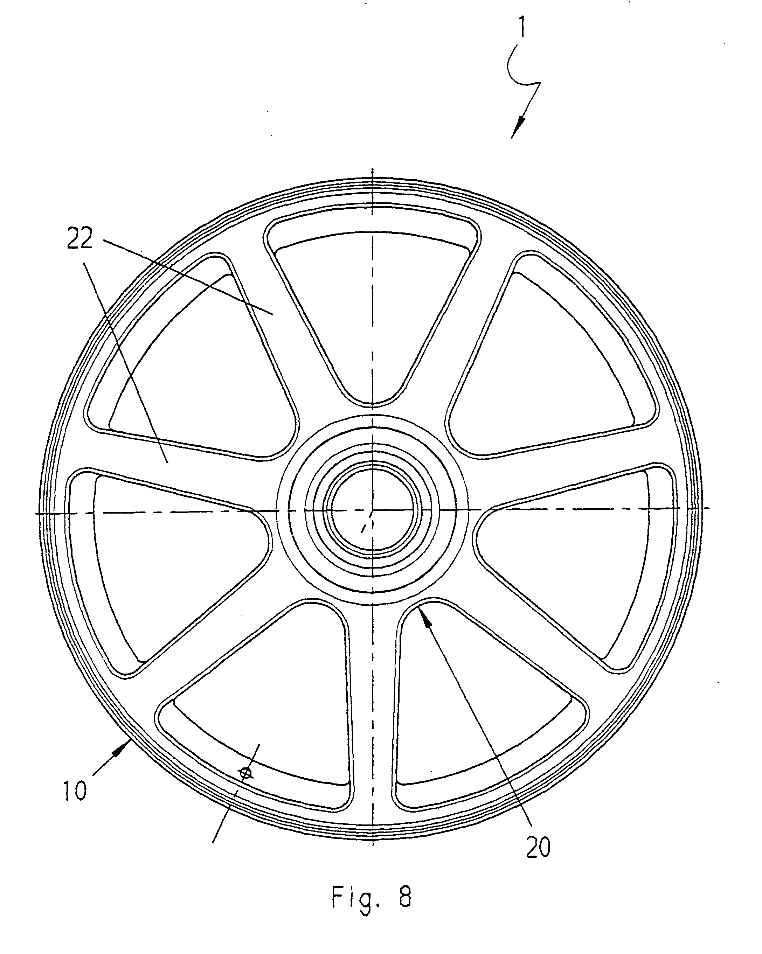

- Fig. 8: Rad in einer Ansicht von vorne.

Der grundsätzliche Aufbau eines Rads 1 ist für sämtliche Ausführungsvarianten in Übereinstimmung. Es ist in an sich bekannter Weise aus einer Radfelge 10 und einem Radstern 20 aufgebaut.

Die Radfelge 10 weist ein Felgeninnenbett 16 und ein Felgenauβenbett 14 auf. Diese gehen axial auswärts jeweils in ein Felgeninnenhorn 18 und ein Felgenaußenhorn 12 über. Zwischen dem Felgeninnenhorn 18 und dem Felgenaußenhorn 12 wird ein hier nicht dargestellter Reifen gehalten, der auf dem Felgeninnenbect 16 und dem Felgenaußenbett 14 sitzt und seitlich am Felgeninnenhorn 18 und Felgenaußenhorn 12 anliegt.

Die Radfelge 10 geht in einen Radstern 20 über, der eine Vielzahl von Speichen 22 aufweist. Die Speichen 22 sind aus Gründen der Gewichtsersparnis als Hohlspeichen ausgeführt und weisen jeweils einen Speichenhohlraum 24 auf. Insoweit stimmen sämtliche Ausführungsvarianten überein.

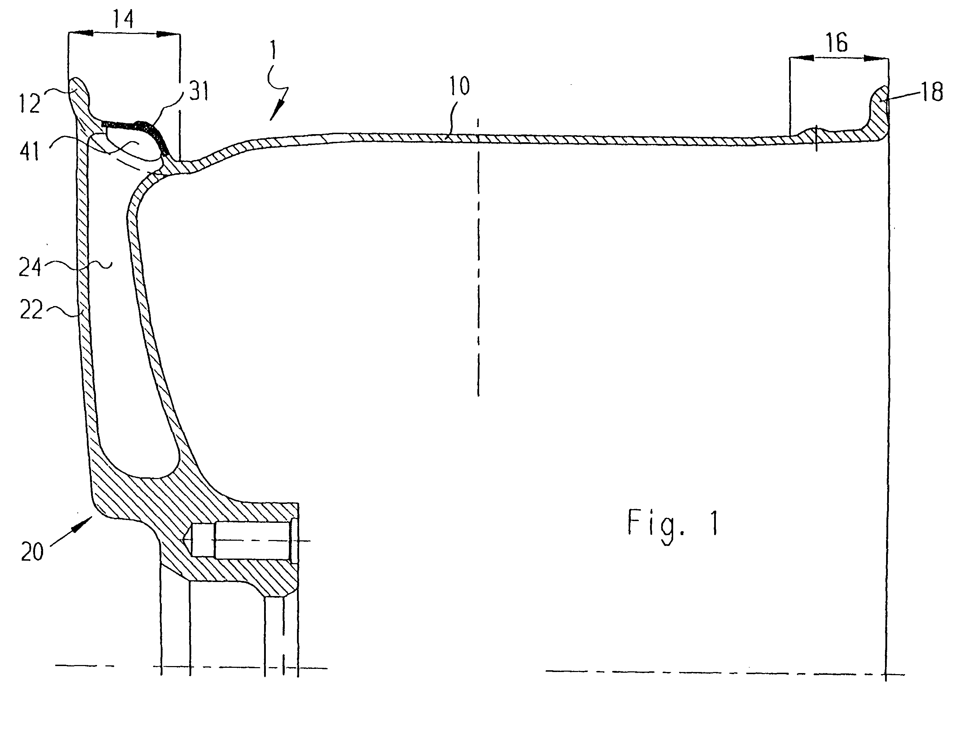

Die in den Fig. 1 bis Fig. 3 dargestellten Ausführungsformen weisen Profilsegmente 31, 32, 33 auf, die in unterschiedlicher Ausprägung im Bereich des Felgenaußenbetts 14 angebracht sind. Sie besitzen jeweils die Form von Halbschalen, so dass jeweils zwei Profilsegmente 31, 32, 33 von außen auf das Rad 1 im Bereich des Felgenaußenbetts 14 aufgesetzt und sowohl miteinander als auch mit dem Rad 1 fest verbunden werden. In radialer Richtung innerhalb ist auf diese Weise ein Hohlraum 41, 42, 43 gebildet, der in Umfangsrichtung durchgehend gestaltet ist. Im Bereich der Speichen 22 besteht eine kommunizierende Verbindung zu den Speichenhohlräumen 24, wodurch eine äußerst stabile und zugleich steife Hohlkammerkonstruktion entsteht. Diese sorgt für ein gegenüber den bisher bekannten Konstruktionen erheblich verbessertes Impact-Verhalten, das besonders wichtig im Hinblick auf unbeabsichtigte Bordsteinkontakte und das Durchfahren von Schlaglöchern ist. Zugleich ist diese Konstruktion sehr leicht, wodurch sich das Gesamtgewicht des Rades 1 erheblich reduziert.

Bei der Variante gemäß Fig. 1 ist das Profilsegment 31 im Wesentlichen L-förmig ausgestaltet und stützt sich einenends axial am Felgenaußenhorn 12 und anderenends radial im Bereich der auslaufenden Speichen 22 ab.

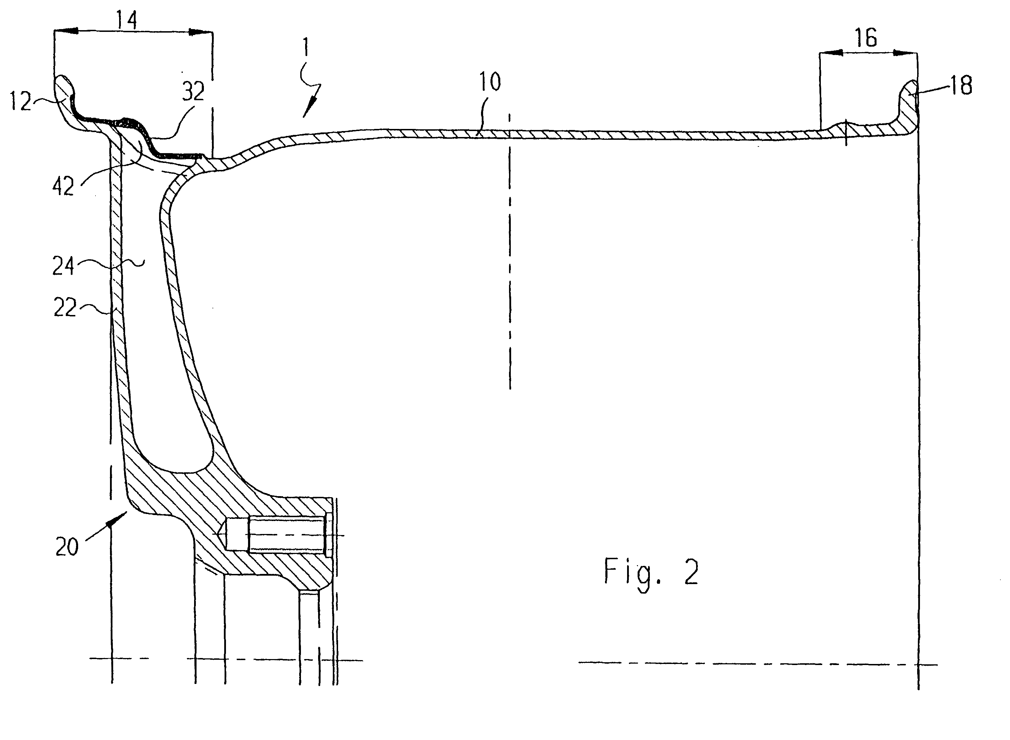

Bei der Ausführungsvariante gemäß Fig. 2 schmiegt sich das Profilsegment 32 längs eines größeren Querschnittabschnitts an das Felgenaußenhorn 12 vollflächig an. Auf diese Weise ist eine optimale Abstützung desjenigen Bereichs des Profilsegments 32 gewährleistet, das als Reifensitz dient.

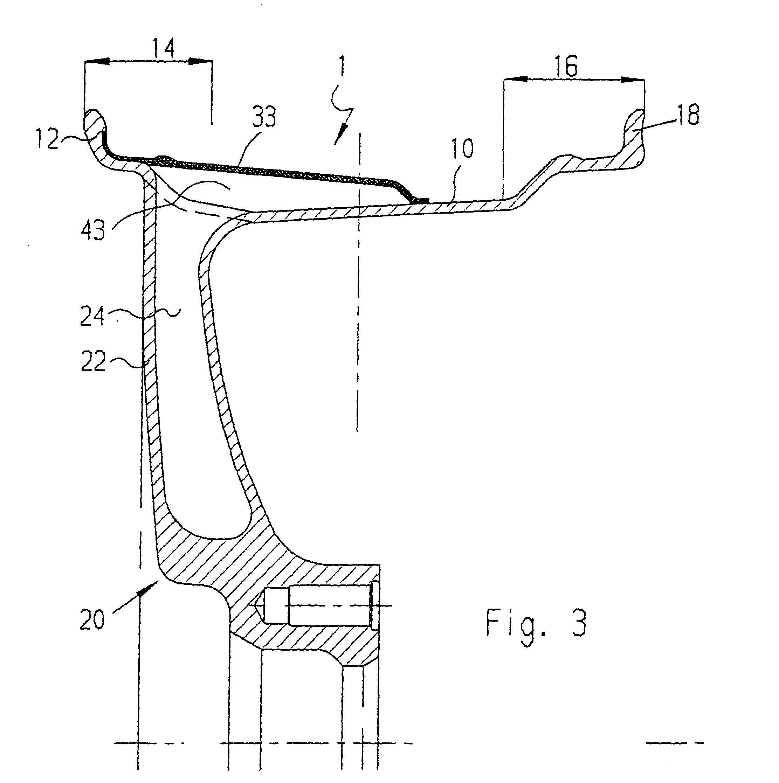

Die Variante gemäß Fig. 3 unterscheidet sich von derjenigen gemäß Fig. 2 hauptsächlich dadurch, dass das Profilsegment 33 weit über die Mittelachse des Rades 1 hinausgeführt ist. Auf diese Weise wird eine starke Erhöhung der Biegesteifigkeit erzielt.

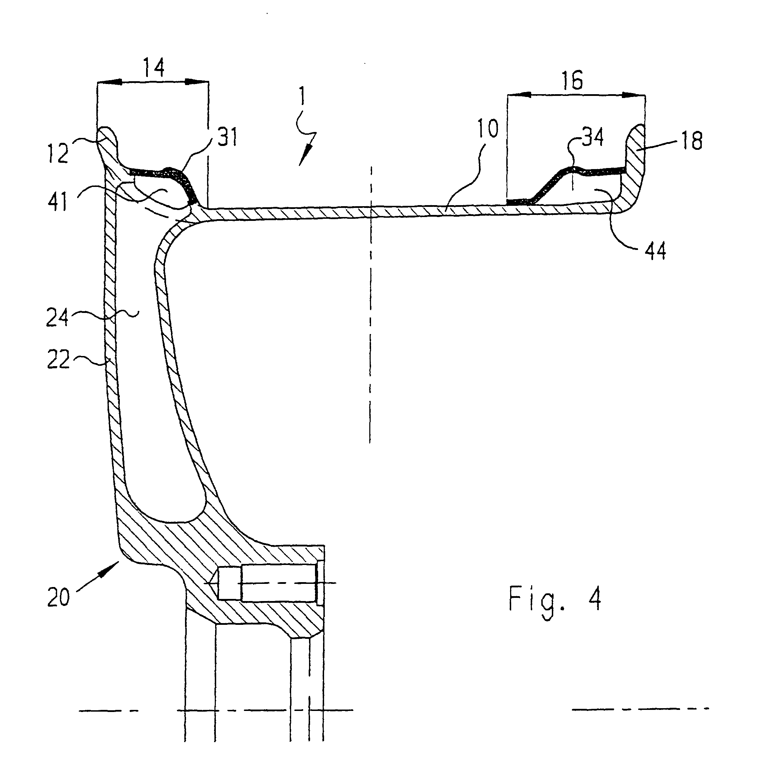

Die Ausführungsvarianten gemäß den Fig. 4 bis Fig. 6 weisen ein mit der Ausführungsvariante gemäß Fig. 1 übereinstimmendes Profilsegment 31 auf. Zusätzlich sind im Bereich des Felgeninnenbetts 16 Profilsegmente 34, 35, 36 vorgesehen, die jeweils eine weitere Hohlkammer 44, 45, 46 bilden. Wiederum sind die Profilsegmente 34, 35, 36 als Halbschalen ausgeführt, die sowohl untereinander als auch mit dem Rad 1 fest verbunden sind. Sie erhöhen dadurch die Biegesteifigkeit im Bereich des Felgeninnenhorns 18, wodurch das Impact-Verhalten auch in diesem Bereich entscheidend verbessert wird. Besonders wichtig ist dies hier im Hinblick auf das Durchfahren von Schlaglöchern.

In der Ausführungsvariante gemäß Fig. 4 sind die Profilsegmente 34 radial außenliegend auf das Rad 1 aufgesetzt und bilden zusammen mit dem Felgeninnenhorn 18 das Felgeninnenbett 16. Die Profilsegmente 34 stützen in radialer Richtung den Reifen unmittelbar ab.

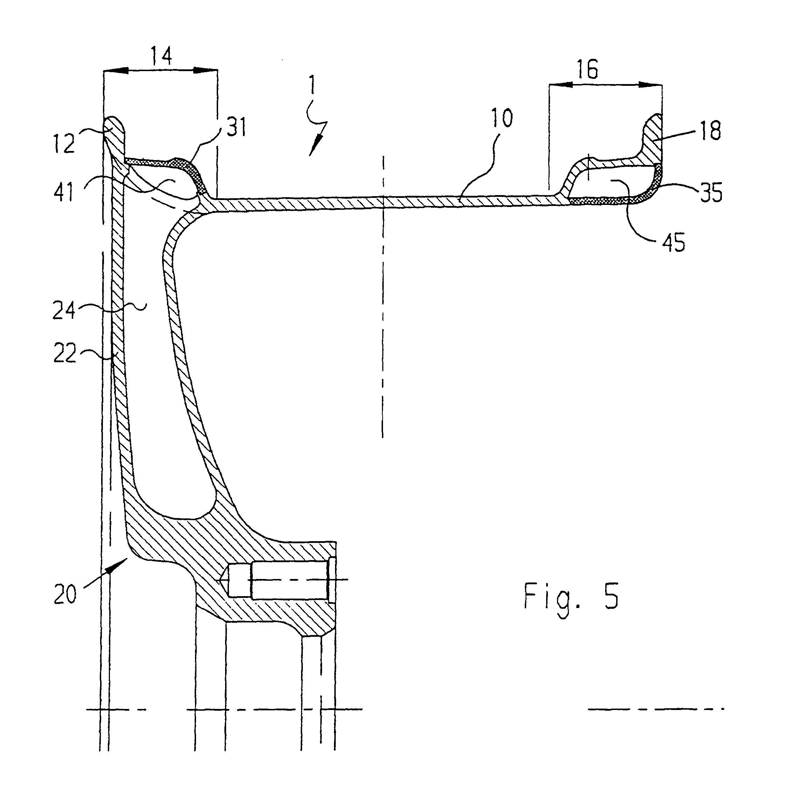

Bei der Ausführungsvariante gemäß Fig. 5 ist das Profilsegment 35 radial innenliegend vorgesehen und dient damit ausschließlich der Steifigkeitserhöhung. Der Reifensitz ist weiterhin unmittelbar an der Radfelge 10 geformt.

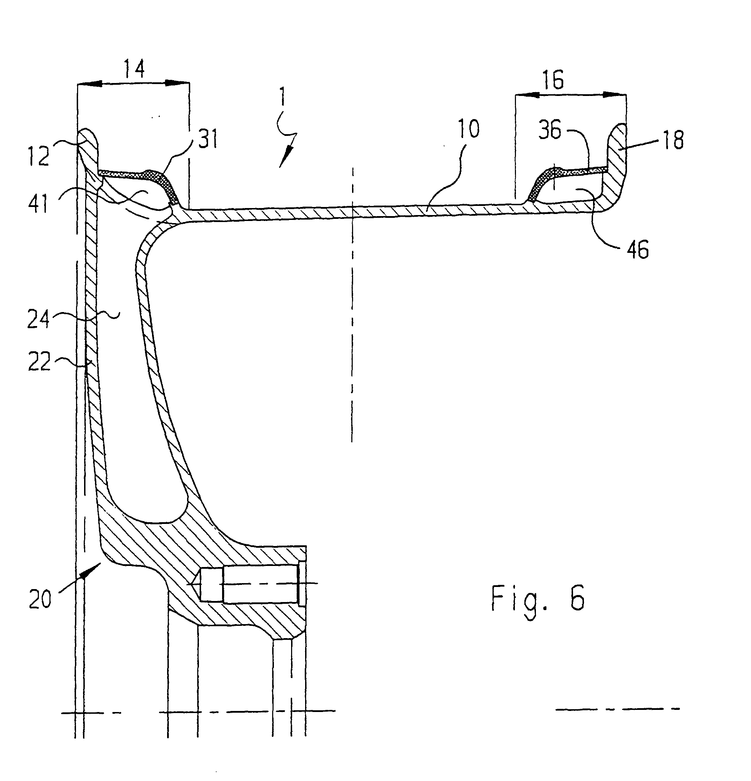

Fig. 6 zeigt eine Variante, bei der das Profilsegment 36 deckungsgleich zum Profilsegment 31 ausgeführt ist. Diese Variante ermöglicht eine Gleichteilekonzeption, da die Profilsegmente 31, 36 wahlweise im Bereich des Felgeninnenbetts 16 oder des Felgenaußenbetts 14 verwendet werden kann.

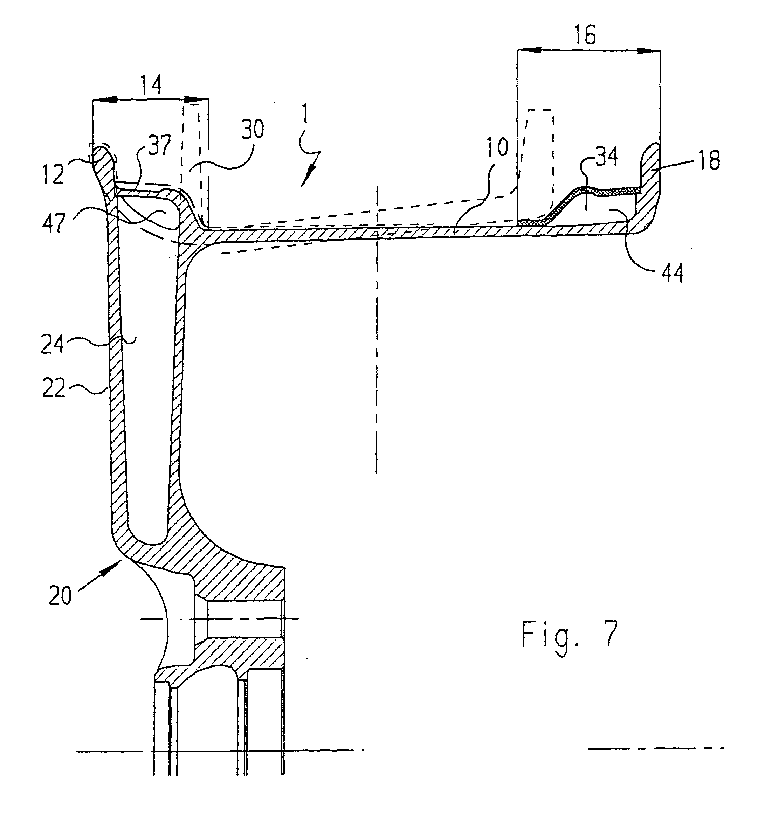

Fig. 7 zeigt eine weitere Variante, bei der im Bereich des Felgeninnenbetts 16 ein Profilsegment 34 in Übereinstimmung mit demjenigen aus Fig. 4 verwendet wird. Die Besonderheit liegt nun darin, dass bei der Formgebung des Rades 1 ein (strichliert dargestellter) Rohling verwendet wird, der im Bereich des Felgenaußenbetts 14 einen Ringsteg 30 aufweist, der in einem Kalt- oder Warmumformvorgang zu einem Profilsegment 37 geformt und zur Anlage an das Felgenaußenhorn 12 gebracht wird. Auf diese Weise wird das Profilsegment 37 integral mit dem Rad 1 gebildet, ohne dass es zusätzlicher Bauteile zur Realisierung der Erfindung bedürfte. Obwohl hier nicht dargestellt, ist auch eine entsprechende Vorgehensweise im Bereich des Felgeninnenbetts 16 möglich.

Obwohl sich das erfindungsgemäße Konzept grundsätzlich für Räder auch aus Stahl eignet, findet es bevorzugt bei Leichtmetallrädern Anwendung. Als besonders vorteilhaft hat sich erwiesen, wenn als Ausgangsmaterialien für das Rad Werkstoffe gemäß der Norm EN 1706 verwendet werden und zwar die Legierungen EN AC-ALSi12Mg oder EN AC-ALSi7Mg. Als Materialien für die Profilsegmente eignen sich Werkstoffe der Norm EN 573-3, nämlich EN AW-A1Mg3 oder EN AW-AlSi1MgMn. Bei den beiden letztgenannten Werkstoffen handelt es sich um sogenannte Knetwerkstoffe, die kalt umformbar sind. Darüber hinaus ist es selbstverständlich möglich, das Rad und die Profilsegmente aus einem übereinstimmenden Werkstoff zu fertigen.

### Bezugszeichenliste

- 1: Rad
- 10: Radfelge
- 12: Felgenaußenhorn
- 14: Felgenaußenbett
- 16: Felgeninnenbett
- 18: Felgeninnenhorn
- 20: Radstern
- 22: Speiche
- 24: Speichenhohlraum
- 30: Ringsteg
- 31: Profilsegment
- 32: Profilsegment
- 33: Profilsegment
- 34: Profilsegment
- 35: Profilsegment
- 36: Profilsegment
- 37: Profilsegment
- 41: Hohlkammer
- 42: Hohlkammer
- 43: Hohlkammer
- 44: Hohlkammer
- 45: Hohlkammer
- 46: Hohlkammer
- 47: Hohlkammer

## Patentansprüche

1. Rad, insbesondere Leichtmetallrad für Kraftfahrzeuge, bestehend im Wesentlichen aus einem Radstern (20) und einer Radfelge (10), wobei die Radfelge (10) ein Felgeninnenbett (16) und ein Felgenaußenbett (14) aufweist, die jeweils in ein Felgeninnenhorn (18) und ein Felgenaußenhorn (12) übergehen und wobei im Bereich des Felgeninnenbetts (16) und/oder des Felgenaußenbetts (14) Profilsegmente (31, 32, 33, 34, 35, 36) vorgesehen sind, die wenigstens eine im Umfangsrichtung zumindest abschnittsweise durchgehende Hohlkammer (41, 42, 43, 44, 45, 46, 47) bilden,
**dadurch gekennzeichnet, dass** die Profilsegmente (31, 32, 33, 34, 35, 36) als separate Teile ausgebildet und mit dem Radstern (20) und/oder der Radfelge (10) verbunden sind.

2. Rad nach Anspruch 1,
**dadurch gekennzeichnet, dass** die dem Felgenaußenbett zugeordnete Hohlkammer (41, 42, 43, 47) mit Speichenhohlräumen (24) verbunden ist.

3. Rad nach einem der vorstehenden Ansprüche,
**dadurch gekennzeichnet, dass** die Profilsegmente (31, 32, 33, 34, 35, 36, 37) zumindest teilweise das Felgeninnenbett (16) und/oder das Felgenaußenbett (14) bilden.

4. Rad nach einem der vorstehenden Ansprüche,
**dadurch gekennzeichnet, dass** die Profilsegmente (31, 32, 33, 34, 35, 36) als Schalen, vorzugsweise als Halbschalen, ausgebildet sind.

5. Rad nach einem der vorstehenden Ansprüche,
**dadurch gekennzeichnet, dass** die Profilsegmente (31, 32, 33, 34, 35, 36) jeweils durch Schweißen, Kleben oder Bördeln miteinander verbunden sind.

6. Rad nach einem der vorstehenden Ansprüche,
**dadurch gekennzeichnet, dass** die Profilsegmente (31) im Bereich des Felgeninnenbetts (16) und die Profilsegmente (36) im Bereich des Felgenaußenbetts (14) deckungsgleich ausgebildet sind.

## Claims

1. Wheel, particularly a light metal wheel for heavy goods vehicles, consisting fundamentally of a spoked wheel centre (20) and a wheel rim (10), in which the wheel rim (10) has an inner bed (16) and an outer bed (14), which merge respectively into an inner flange (18) and an outer flange (12) where, in the vicinity of the inner bed (16) and/or the outer bed (14), profile segments (31, 32, 33, 34, 35, 36) are provided, forming at least one continuous cavity (41, 42, 43, 44, 45, 46, 47) at least sectionally in the direction of the circumference,
***characterised in that*** the profile segments (31, 32, 33, 34, 35, 36) are formed as separate components connected with the spoked wheel centre (20) and/or the wheel rim (10).

2. Wheel as in Claim 1,
***characterised in that*** the cavity (41, 42, 43, 47) corresponding to the outer bed is connected with spoke cavities (24).

3. Wheel as in either of the previous claims,
***characterised in that*** the profile segments (31, 32, 33, 34, 35, 36, 37) form the inner bed (16) and/or the outer bed (14) in part at least.

4. Wheel as in any of the previous claims,
***characterised in that*** the profile segments (31, 32, 33, 34, 35, 36, 37) are shaped as shells, preferably half-shells.

5. Wheel as in any of the previous claims,
***characterised in that*** the profile segments (31, 32, 33, 34, 35, 36) are interconnected by means of welding, bonding, or crimping.

6. Wheel as in any of the previous claims,
***characterised in that*** the profile segments (31) in the vicinity of the inner bed (16) and the profile segment (36) in the vicinity of the outer bed (14) are formed congruently.

## Revendications

1. Roue, notamment roue en métal léger pour véhicule, composée essentiellement d'une étoile de roue (20) et d'une jante (10), la jante (10) ayant un talon intérieur (16) et un talon extérieur (14) qui se terminent respectivement par un rebord de jante intérieur (18) et un rebord de jante extérieur (12), avec au niveau du talon intérieur (16) et/ou du talon extérieur (14) des segments profilés (31, 32, 33, 34, 35, 36) formant au moins une chambre creuse (41, 42, 43, 44, 45, 46, 47) continue par segment au moins dans la direction périphérique,
**caractérisée en ce que**
les segments de profil (31, 32, 33, 34, 35, 36) sont des pièces séparées reliées à l'étoile de roue (20) et/ou à la jante (11).

2. Roue selon la revendication 1,
**caractérisée en ce que**
la chambre creuse (41, 42, 43, 47) associée au talon de jante est reliée aux cavités (24) des rayons.

3. Roue selon l'une des revendications précédentes,
**caractérisée en ce que**
les segments profilés (31, 32, 33, 34, 35,36) forment au moins en partie le talon intérieur (16) et/ou le talon extérieur (14).

4. Roue selon l'une des revendications précédentes,
**caractérisée en ce que**
les segments profilés (31, 32, 33, 34, 35, 36) sont des coquilles de préférence des demi-coquilles.

5. Roue selon l'une des revendications précédentes,
**caractérisée en ce que**
les segments profilés (31, 32, 33, 34, 35, 36) sont reliés les uns aux autres par soudage, collage ou sertissage.

6. Roue selon l'une quelconque des revendications,
**caractérisée en ce que**
les segments profilés (31) sont réalisés au niveau du talon intérieur (16) et les segments de profilés (36) au niveau du talon extérieur (14) de façon à se correspondre.
